# EUROPEAN PATENT SPECIFICATION

(11) **EP 3 008 436 B1**
(45) Date of publication and mention of the grant of the patent: **18.12.2019**
(21) Application number: 14811497.8
(22) Date of filing: 09.06.2014
(51) Int. Cl.: A61J 7/04, A61J 1/03

(54) **AUTOMATED MEDICATION DISPENSING AND RELATED APPLICATIONS THEREOF**
AUTOMATISIERTE MEDIKAMENTENAUSGABE UND ANWENDUNGEN DAFÜR
DISTRIBUTION AUTOMATIQUE DE MÉDICAMENTS ET SES APPLICATIONS

(30) Priority: 09.06.2013 US 201361832883 P
(43) Date of publication of application: 20.04.2016
(73) Proprietor: Vaica Medical Ltd., 66550 Tel-Aviv (IL)
(72) Inventor: GOFER, Tomer, 8150265 Yavne (IL); MARGALIT, Gil, 4658017 Herzlia (IL)
(74) Representative: Boult Wade Tennant LLP
(86) International application number: PCT/IL2014/050517
(87) International publication number: WO 2014/199374

(56) References cited:
- WO-A1-2010/107761
- WO-A1-2012/111034
- US-A- 5 408 443
- US-A1- 2009 108 016
- US-A1- 2011 231 006
- US-A1- 2011 231 006
- US-A1- 2012 154 120
- US-A1- 2013 073 078
- US-A1- 2013 124 227
- US-B1- 6 457 611
- US-B1- 8 193 918

## Description

### FIELD OF THE INVENTION

The present invention, in some embodiments thereof, relates to the field of automated (automatic) medication dispensing and applications thereof, and more particularly, but not exclusively, to automated medication dispensing devices, kits, systems, methods, and related applications thereof, such as using computer readable (e.g., NFC [near field communication], or QR [quick response]) standards for monitoring and verifying patient and caregiver activities and health related data-information.

### BACKGROUND OF THE INVENTION

Teachings of or/and relating to automated (automatic) medication dispensing are well known and taught about in scientific, technical, and patent, literature, and currently widely practiced in the general field of health and patient care.

PCT International Patent Application Publication No. WO 2008/004212, and U.S. Patent No. 8,085,135, both by same applicant/assignee of the present disclosure, are directed to teachings about medication dispensing equipment and methodologies. The latter disclosure incorporates use of RFID technology, for example, as part of scheduling, determining, and monitoring medication consumption.

US 2012/0154120 discloses "a medication dispensing system comprising a container including at least two compartments each compartment including a cavity configured to contain at least one first medication, a covering over the cavity configured to break under pressure, and an elongate conductive element on at least a portion of the covering and configured [sic] sever upon breaking the covering" (abstract).

US 8,193,918 discloses "a medication dispensing system that instructs the user through visual and audio cues, such as the illumination of individual medication cups that are arrayed in accordance with a daily and weekly schedule in separate orifices within the dispenser body. The system and method monitors compliance by determining when an indicated cup is accessed...The cups can be refilled at an appropriate time based upon an indication by the system, and/or can be provided in removable refill tray (that is prefilled by a pharmacist)" (abstract).

In spite of extensive teachings in the field of automated (automatic) medication dispensing, there is an on-going need for developing and practicing improved and new medication dispensing equipment and methodologies, and related applications thereof.

### SUMMARY OF THE INVENTION

The present invention, in some embodiments thereof, relates to the field of automated (automatic) medication dispensing, and more particularly, but not exclusively, to automated medication dispensing devices, kits, systems, methods, and applications thereof, such as using computer readable (e.g., NFC [near field communication], or QR) standards for monitoring and verifying patient and caregiver activities and health related data-information.

According to the present invention, as defined by the appended claims, there is provided a medication dispensing system, comprising:a medication dispensing device comprising a housing having a plurality of access lids; and a medication holder comprising a receptacle containing a plurality of individual medication holding compartments;wherein said housing includes a sliding mechanism;characterized in that: said medication holder is configured to removably slide sideways into and out of said medication dispensing device via said sliding mechanism, whereby each of said compartments is configured to be slidable sideways to a location directly under an associated access lid in said housing.

According to some embodiments of the invention, for the medication dispensing device, the sliding mechanism is configured to receive, hold, and release the medication holder according to at least one feature selected from the group consisting of structural features, electronic features, RF features, magnetic features, and visual features.

According to some embodiments of the invention, for the medication dispensing device, the sliding mechanism is configured to receive, hold, and release the medication holder having one or more specific structural features.

According to some embodiments of the invention, the medication dispensing device comprises structural features correspondingly matching the one or more specific structural features of the medication holder.

According to some embodiments of the invention, for the medication dispensing device, the correspondingly matching structural features are spatial clearances, pegs, or a combination thereof.

According to some embodiments of the invention, the medication dispensing device comprises one or more electronic sensors configured to sense insertion or/and removal, via the sliding mechanism, of the medication holder.

According to some embodiments of the invention, the medication dispensing device comprises at least one electronic reader selected from the group consisting of NFC readers, RFID readers, QR code readers, and barcode readers.

According to some embodiments of the invention, for the medication dispensing device, the electronic reader is configured to communicate with the medication holder.

According to some embodiments of the invention, the medication dispensing device comprises at least one electronic writer configured to record on an NFC/RFID tag in response to receiving data from the medication holder.

According to some embodiments of the invention, for the medication dispensing device, the at least one electronic writer is selected from the group consisting of NFC writers and RFID writers.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of some embodiments of the invention can involve performing or completing selected tasks (steps, procedures) manually, automatically, or a combination thereof. Moreover, according to actual instrumentation and equipment of some embodiments of the invention, several selected tasks could be implemented by hardware, software, firmware, or a combination thereof, using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks as described herein may be performed by a data processor, such as a computing platform for executing a plurality of instructions. Optionally, the data processor includes a volatile memory for storing instructions or/and data or/and a non-volatile storage, for example, a magnetic hard-disk or/and removable media, for storing instructions or/and data. Optionally, a network connection is provided as well. A display or/and a user input device such as a keyboard or mouse are optionally provided as well.

### BRIEF DESCRIPTION OF THE DRAWINGS

Some embodiments of the present invention are herein described, by way of example only, with reference to the accompanying drawings. With specific reference now to the drawings in detail, it is stressed that the particulars shown are by way of example and for purposes of illustrative description of some embodiments of the present invention. In this regard, the description taken together with the accompanying drawings make apparent to those skilled in the art how some embodiments of the present invention may be practiced.

In the drawings:
FIG. 1 is a schematic front and side view of a medication dispensing device, shown containing a fully inserted medication holder, in accordance with some embodiments of the invention;
FIG. 2 is a schematic perspective view of an exemplary medication holder (a disposable medication blister pack), for use with the medication dispensing device, in accordance with some embodiments of the invention;
FIG. 3 is a schematic perspective view of an exemplary medication holder (a reusable medication tray), for use with the medication dispensing device, in accordance with some embodiments of the invention;
FIG. 4 is a schematic perspective view of an exemplary medication holder (disposable medication blister pack) shown with the individual medication compartments covered and sealed with a covering / sealing material, in accordance with some embodiments of the invention;
FIG. 5 is a schematic front and side view of the medication dispensing device shown containing a partially inserted medication holder (disposable medication blister pack or reusable medication tray) having outward facing holes, in accordance with some embodiments of the invention;
FIG. 6 is a schematic front and side view of the medication dispensing device shown containing a partially inserted medication holder (disposable medication blister pack or reusable medication tray) having an outward facing external handle, in accordance with some embodiments of the invention;
FIG. 7A is a schematic side view of the medication dispensing device, shown without a medication holder, highlighting an exemplary sliding mechanism, in accordance with some embodiments of the invention;
FIG. 7B is a schematic front view of the medication dispensing device (cover removed), shown without a medication holder, further highlighting an exemplary sliding mechanism, in accordance with some embodiments of the invention;
FIG. 8 is a schematic back and side view of the medication dispensing device, shown with a fully inserted medication holder (disposable medication blister pack or reusable medication tray) whose back side is in a closed position, in accordance with some embodiments of the invention;
FIG. 9 is a schematic back and side view of the medication dispensing device, shown with a fully inserted medication holder (disposable medication blister pack or reusable medication tray) whose back side is in an open position and includes a medication instruction sheet, in accordance with some embodiments of the invention;
FIG. 10 is a schematic front and side view of the medication dispensing device, shown containing a fully inserted medication holder (disposable medication blister pack or reusable medication tray), highlighting an exemplary individual medication compartment (unsealed) whose lid is in an open position, in accordance with some embodiments of the invention;
FIG. 11 is a schematic front and side view of the medication dispensing device, shown containing a fully inserted medication holder (disposable medication blister pack or reusable medication tray), highlighting an exemplary individual medication compartment (sealed) whose lid is in an open position, in accordance with some embodiments of the invention;
FIG. 12 is a schematic perspective view of a medication cup, in accordance with some embodiments of the invention;
FIGs. 13A - 13B are schematic views illustrating use of the medication cup to break the cover / seal of an individual medication compartment of a fully inserted medication holder (FIG. 13A: teeth towards medication dispensing device), and to retrieve and hold medication removed therefrom (FIG. 13B: teeth away from medication dispensing device), in accordance with some embodiments of the invention;
FIG. 14 is a schematic front view of the medication dispensing device, shown with an NFC/RFID Tag and an NFC/RFID Reader / Writer, in accordance with some embodiments of the invention;
FIGs. 15A - 15B are schematic front and side views of the medication dispensing device, shown with a cover (open, closed positions) configured and interfacing with a locking mechanism (locking elements) [unlocked, locked configurations], in accordance with some embodiments of the invention;
FIG. 16 is a flow diagram of a method for dispensing medication, in accordance with some embodiments of the invention;
FIG. 17 is a flow diagram of a system for dispensing medication, in accordance with some embodiments of the invention;
FIG. 18 is a flow diagram of a method for using computer readable (e.g., NFC [near field communication]) standards for monitoring and verifying patient and caregiver activities and health related data-information, in accordance with some embodiments of the invention; and
FIG. 19 is a flow diagram of a system for using computer readable (e.g., NFC [near field communication]) standards for monitoring and verifying patient and caregiver activities and health related data-information, in accordance with some embodiments of the invention.

### DESCRIPTION OF SPECIFIC EMBODIMENTS OF THE INVENTION

The present invention relates to a medication dispensing system.

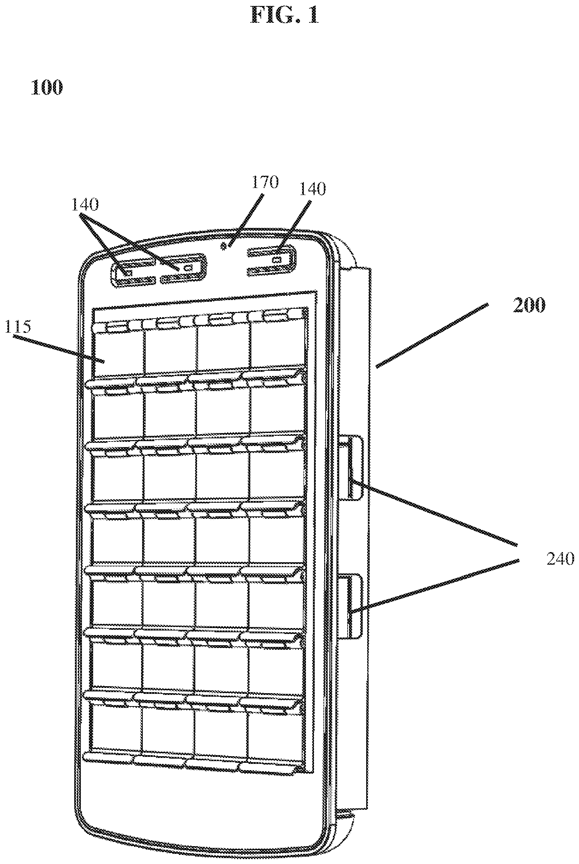

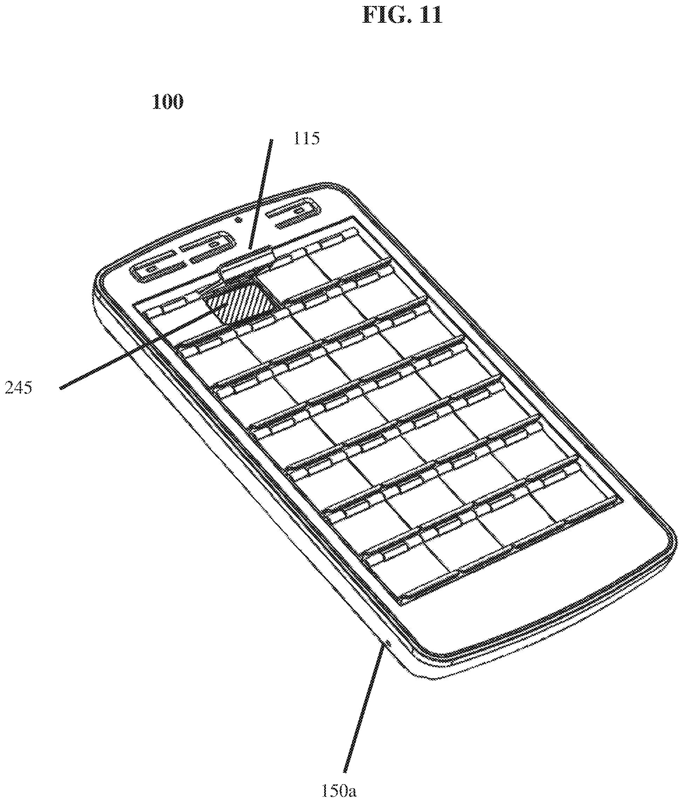

In the following illustrative description of some embodiments of the invention, reference is made to the figures (FIGS. 1 through 19). Throughout the following description and accompanying drawings, same reference numbers refer to same components, elements, or features. It is to be understood that the invention is defined by the appended claims.

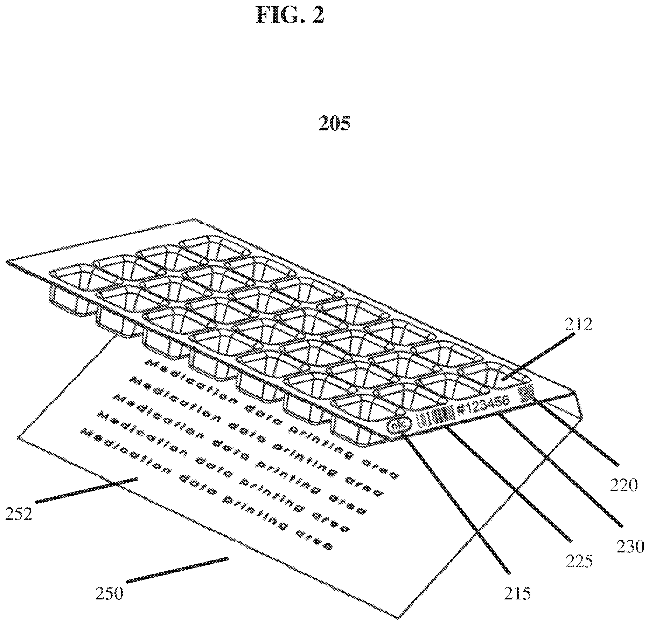

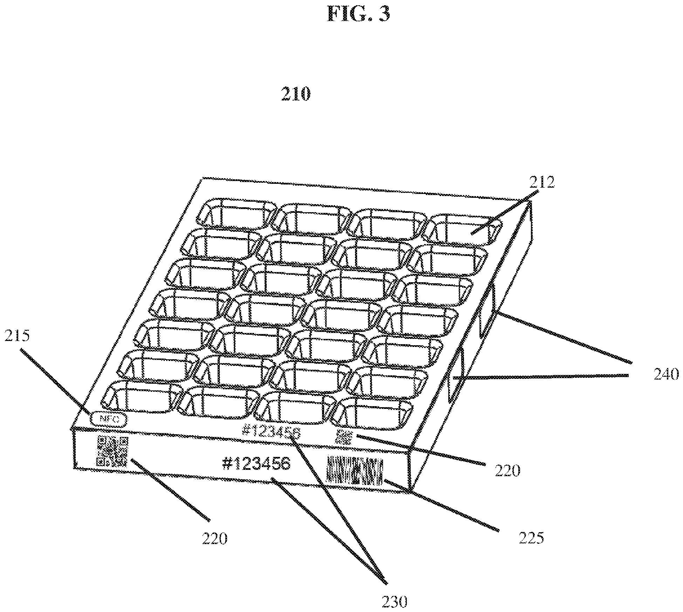

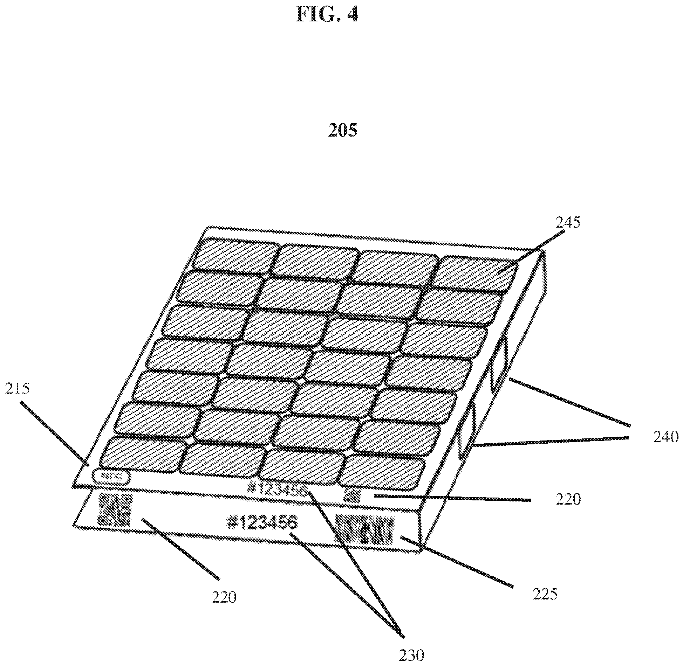

The medication dispenser and reminder (herein, also referred to as medication dispensing device) (for example, **100** in FIGS. 1, 5 - 11, and 13 - 15) can hold a medication holder (for example, **200** in FIGS. 1, 5, and 6) in the form of a disposable medication blister pack (unit-dose or multi-dose) (for example, **205** in FIGS. 2 and 4) or in the form of a reusable medication tray (for example, **210** in FIG. 3), having at least one individual medication holding compartment (for example, **212** in FIGS. 2 and 3).

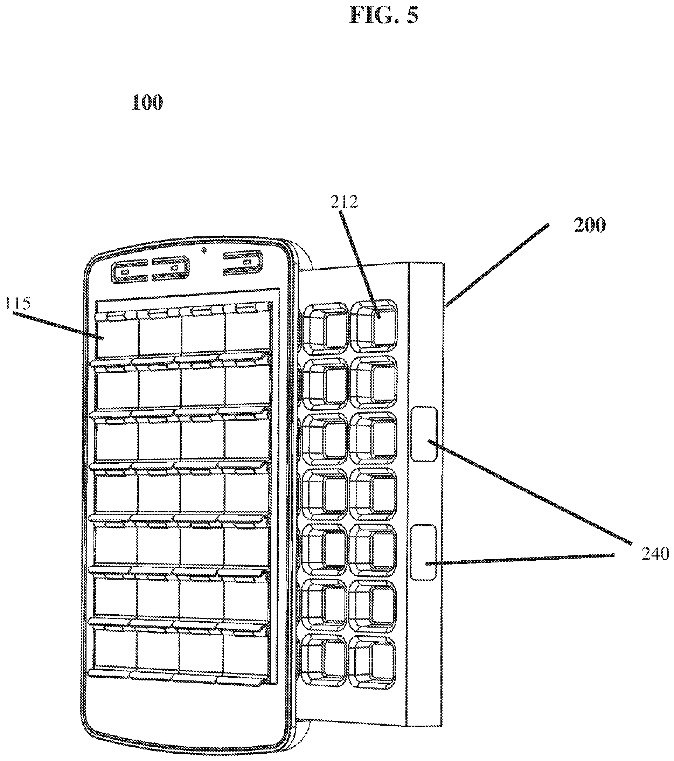

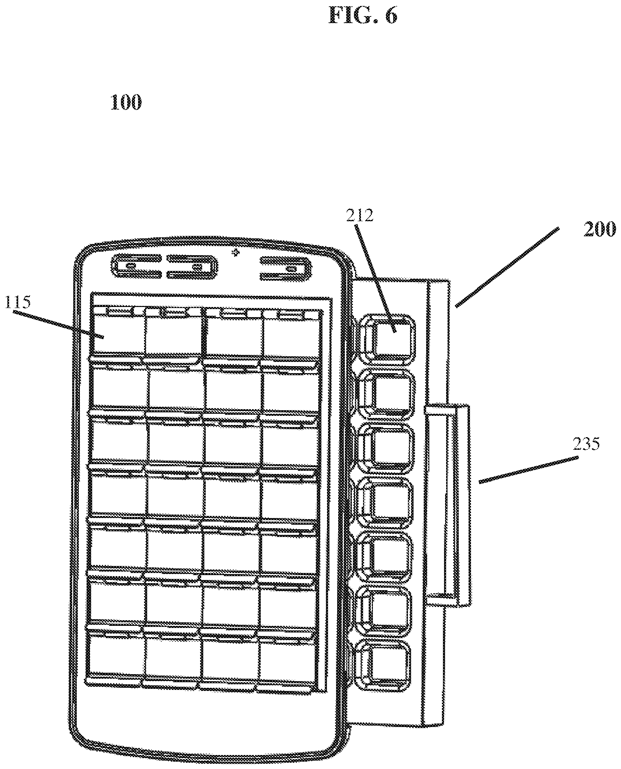

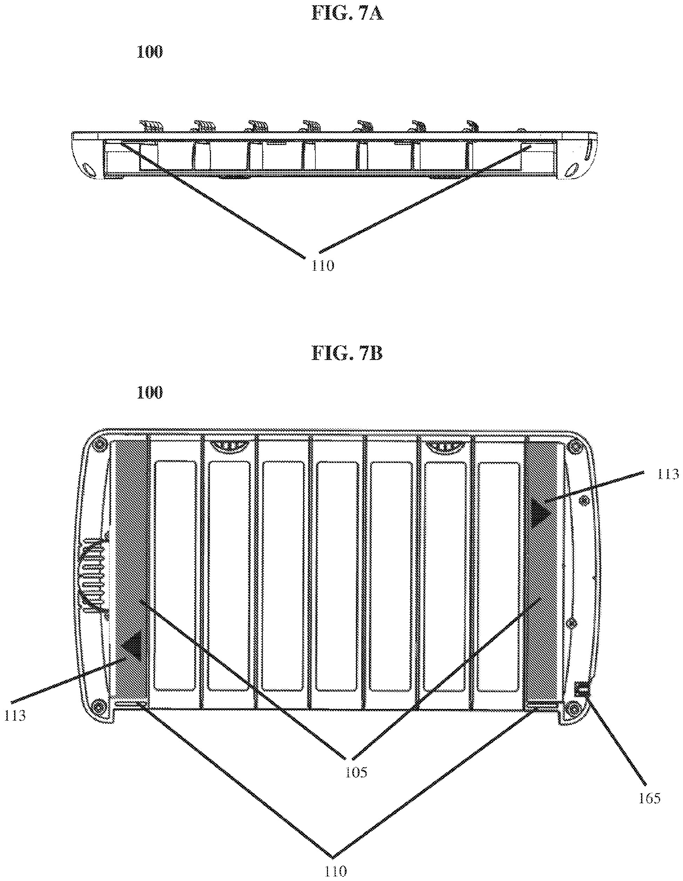

The medication dispensing device **100,** optionally, has a sliding mechanism (for example, **105** and **110** in FIGS. 7A - 7B) that allows the loading or refilling of the medication dispensing device **100** with a new medication holder **200** (blister pack **205** or tray **210**) by sliding the blister pack **205** or the tray **210** into the medication dispensing device **100,** sideways, similar to the manner by which VHS cassettes are loaded into a VHS player (for example, as shown in FIGS. 5 and 6).

The side filling mechanism (FIGS. 7A - 7B, **105** and **110**) of the medication dispensing device **100** described above, optionally, allows the insertion of the medication holder **200** (blister pack **205** or tray **210**) in only one direction so there could be no mistake made in inserting the medication holder **200** (blister pack **205** or tray **210**) the wrong way. The sliding mechanism, optionally, enables the insertion / removal of the medication holder **200** into the medication dispensing device simply by pushing / pulling the (blister / tray) medication holder **200** sideways, without any need to open the medication dispensing device housing or to attach anything directly to the (blister pack or tray) medication holder **200.**

The side sliding filling mechanism (FIGS. 7A - 7B, **105** and **110**) described above, optionally, has an optional mechanism to accept only blister packs **205** or trays **210** that were specifically designed and constructed (for example, with one or more specific structural features) to work with the medication dispensing device **100,** by either mechanical means, such as special obstructions / shapes carved in the blister pack **205** / tray **210** and correspondingly matching structural features such as spatial clearances or/and pegs in the medication dispensing device **100** itself, and/or by electronic and/or RF and/or magnetic and/or visual features or means.

The medication dispensing device **100,** optionally, has electronic sensor or sensors (for example, **113** in FIG. 7B) to sense the insertion or/and removal, via the sliding mechanism, of a medication holder (blister pack **205** or tray **210**), for example, when replacing an empty disposable blister pack **205,** or, when resupplying or refilling an empty reusable medication tray **210** with new medication, or, replacing a damaged medication holder (blister pack **205** or tray **210**).

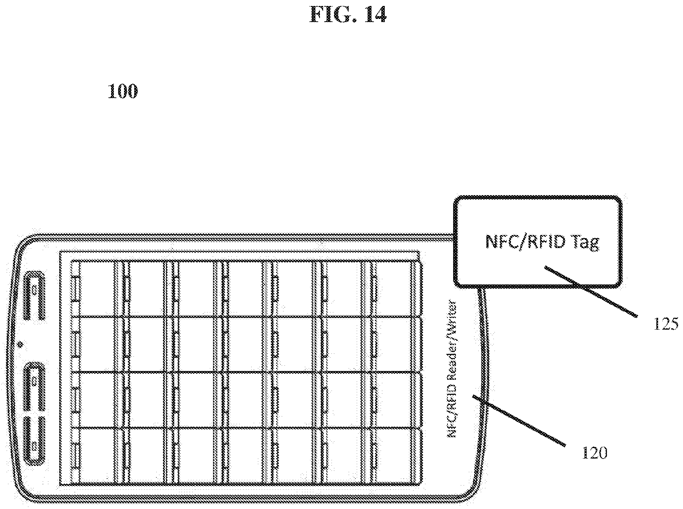

The medication dispensing device **100,** optionally, can have a built-in NFC and/or RFID and/or QR (quick response) code and/or barcode and/or magnetic reader/s (for example, **120** in FIG. 14) to read the medication holder **200** (blister pack **205** or tray **210**) unique electronic code or serial number and data (for example, **215, 220, 225, 230,** in FIGS. 2, 3, 4). The medication holder **200** (blister pack **205** or tray **210**), optionally, can deliver data to the medication dispensing device **100** in either visual means, such as embedded in printed QR (quick response) codes or barcodes, or via digitally stored means, such as blister-embedded RFID, NFC or other digitally stored and/or RF and/or magnetic embedded means.

The medication holder **200,** optionally, can deliver unique data-information to the medication dispensing device **100** via printed or RF or magnetic embedded means.

The data delivered by the medication holder **200** (blister pack **205** or tray **210**) to the medication dispensing device **100,** optionally, can be used to directly program the medication dispensing device **100** with specific instructions, such as specific medication schedule for that particular medication holder **200** (blister pack **205** or tray **210**), the medication holder **200** (blister pack **205** or tray **210**) start and/or expiration date, the patient it is issued to, the identity of the issuing/filling entity, etc. The medication dispensing device **100,** optionally, can also use this (blister pack or tray) medication holder **200** encoded data to program back a server with (blister pack or tray) medication holder **200** and patient specific data and to receive from the server instructions that are specific for that unique (blister pack or tray) medication holder **200** or patient.

The medication dispensing device **100,** optionally, can have a built-in NFC and/or RFID writer/s (for example, **120** in FIG. 14) to record on an NFC/RFID tag (for example, **125** in FIG. 14) all the information and/or events that the medication dispensing device **100** normally tracks and records, as further described hereinbelow. The NFC/RFID tag **125,** optionally, can be (temporarily) embedded in the medication dispensing device **100,** or in the medication holder **200** (blister pack **205** or tray **210**) or in any other object placed in the physical proximity of the medication dispensing device **100.** The data written by the medication dispensing device **100** to the NFC/RFID tag, optionally, can be read and retrieved later by another device, such as a smartphone, a tablet or other computing, communication, or medical device, and be used by that other device for further data processing or to transmit / upload this data to a remote server.

The medication holder **200** (disposable medication blister pack **205** or tray **210**), optionally, has an external handle (for example, **235** in FIG. 6) or holes (for example, **240** in FIGS. 1, 3, 4, 5) punched to the outward facing medication holder **200** (blister pack **205** or tray **210**) side, to assist and to ease the insertion and removal of the blister pack or tray medication holder **200.**

The medication dispensing device **100,** optionally, has one or more lids (for example, **115** in FIGS. 1, 5, 6, 10, 11, 13A, 13B), such that there is a lid **115** for the cavity of each individual medication holding compartment **212** of the (blister pack or tray) medication holder **200.**

Once a medication holder **200** (blister pack **205** or tray **210**) is inserted into the medication dispensing device **100,** each individual medication holding compartment cavity **212,** optionally, is located directly under a lid **115** of the medication dispensing device **100,** such that the lid **115** is aligned with its associated (blister pack or tray) medication holding compartment cavity **212** and the opening of the lid **115** allows direct access to its associated (blister pack or tray) medication holding compartment cavity **212** or to the foil covering it (for example, as shown by **240** in FIGS. 4, 11, and 13A).

In order to take medication, a user (for example, a patient) needs to open the lid **115** (for example, FIGS. 1, 5, 6, 10, 11, 13A, 13B) and take the medication found in the medication holding compartment cavity **212** underneath. If the (blister pack or tray) medication holder **200** is sealed with a foil (for example, **245** in FIGS. 4, 11, and 13A) then the user needs first to break/tear the medication holder (blister pack or tray) foil **240** underneath the lid **115** and then take the medication found in the medication compartment cavity **212** covered by the broken / torn foil **245.**

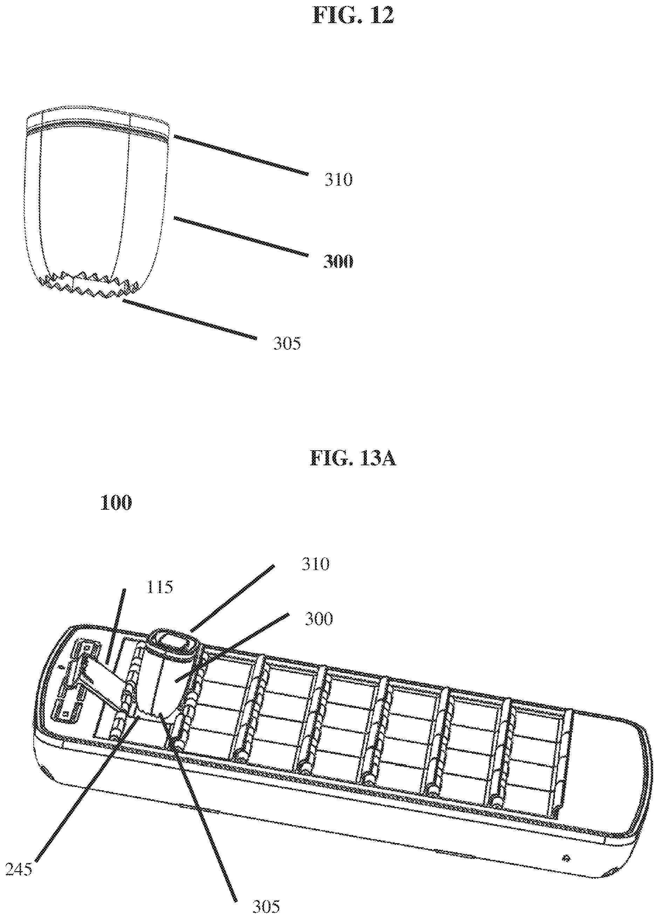

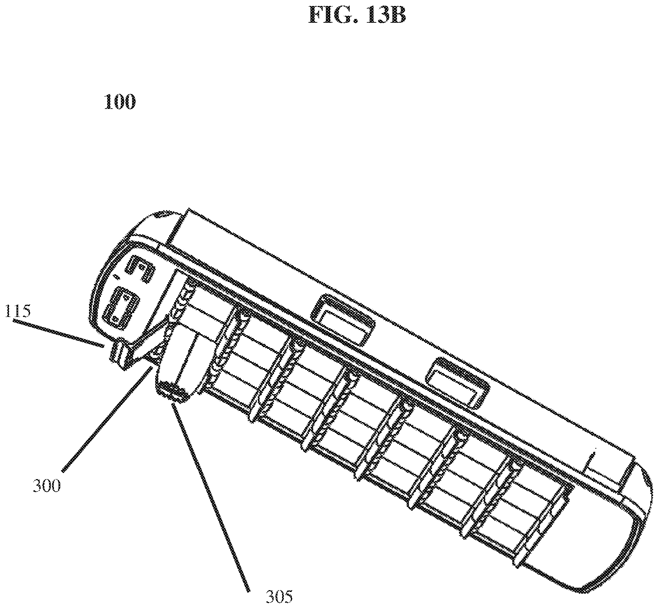

The medication dispensing device **100,** optionally, may be provided with an optional medication cup (for example, **300** in FIGS. 12, 13A, 13B) that can be used both to tear the medication holder (blister pack or tray) foil **245** by using special tearing elements, such as tearing teeth (for example, **305**) of the medication cup **300** and to retrieve and hold the medication removed from the blister pack or tray medication holding compartment cavity **212.** By turning the medication dispensing device **100** upside down after the medication cup teeth **305** tear the foil **245,** the medication stored in the medication holding compartment cavity **212** is dropped directly into the medication cup **300** and can be retrieved from there by the user (as shown in FIGS. 13A - 13B).

For the medication cup **300,** optionally, the size (for example, width, diameter) of the first end with the tearing elements **305,** optionally, is configured to be smaller than the size (for example, width, diameter) of the medication holding compartment **212** and of the medication holder (blister pack or tray) foil **240** underneath the lid **115.** Optionally, the shape of the medication cup **300** corresponds to, or even matches, the shape of the medication holding compartment **212.** Optionally, the medication cup **300** has a conical shape for correctly fitting into the medication holding compartment **212.**

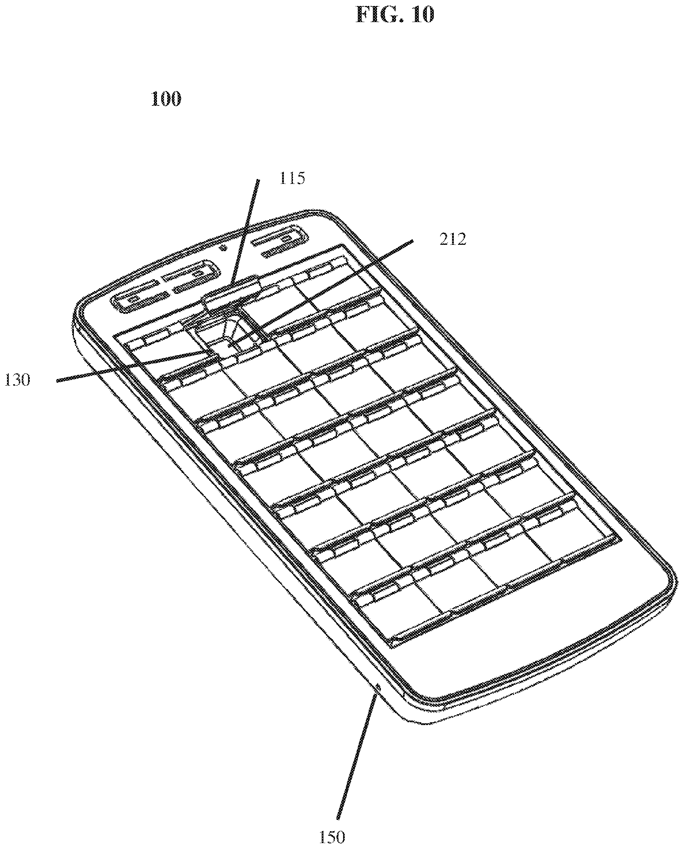

The medication dispensing device **100,** optionally, identifies which medication holding compartment cavity **212** is opened and when by detecting (for example, in FIG. 10, via medication holding compartment sensor **130**) the opening and closing of the lid/s **115** and/or the tear of a specific medication holding compartment cavity foil **245.**

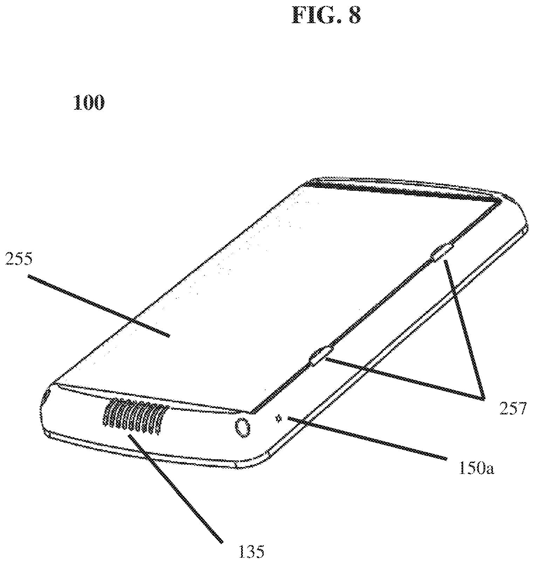

The medication dispensing device **100,** optionally, reminds (by audio and visual methods), for example, via a speaker **135** [FIG. 8] and a display **140** [FIG. 1], when to take medications and from which medication holder (blister pack / tray) medication holding compartment cavity **212** it should be taken.

The medication dispensing device **100,** optionally, can track the use and status of the medication dispensing device **100** and report to a server any change of status, such as "medication was dispensed", "open lid", "refill is required", "refill was performed", "medication dispensing time is over", "medication was dispense out of time", "wrong lid was opened", "early dose was take", "low battery", "out of power", etc.

The medication dispensing device **100** and its medication dispensing schedule, optionally, can be programmed from a remote server.

The medication dispensing device lids **115,** optionally, block direct sunlight from reaching the medication and tampering with it.

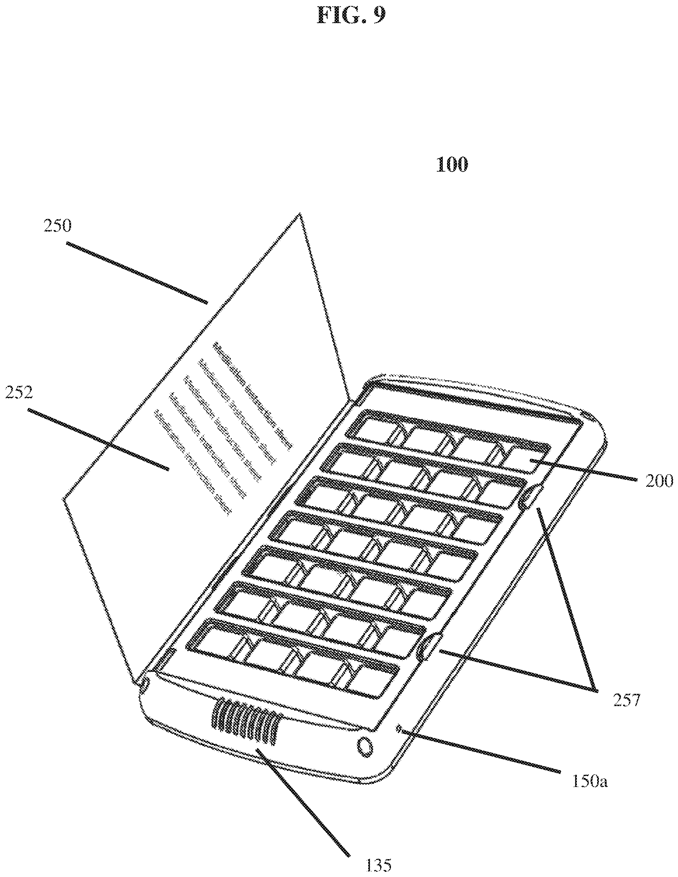

The medication dispensing device mechanics, optionally, allows a clear access to and the viewing of a medication instruction sheet (for example, **250** in FIGS. 2 and 9), without any need to remove the (blister pack or tray) medication holder **200.** This allows the user to read the medication instructions (for example, **252** in FIGS. 2 and 9) attached to the (blister pack / tray) medication holder **200** without having to pull out or manipulate the (blister pack / tray) medication holder **200.**

The bottom / back side (for example, **255** in FIGS. 8) of either the blister pack or tray medication holder **200,** optionally, can be transparent. The medication dispensing device **100,** optionally, allows a user to view the medications stored in the (blister pack or tray) medication holder **200** from the bottom / back side of the medication dispensing device **100,** without opening the lids **115** or removing the (blister pack or tray) medication holder **200,** to enable the user to see the status of the medication supply - how much medication is still left in the (blister pack or tray) medication holder **200,** which medication is stored in each (blister pack or tray) medication holding compartment cavity **212,** which medication holding compartment cavities **212** are empty and which medication holding compartment cavities **212** still store medications. The medication dispensing device **100,** optionally, may include holding elements (such as clips, clamps, notches), (for example, **257** in FIGS. 8 and 9) for holding the bottom / back side **255** of the blister pack medication holder **205,** or for holding the medication instructions sheet **250,** in a closed position.

The medication dispensing device **100,** optionally, includes an optional built-in NFC reader and/or transmitter (for example, **120** in FIG. 14), to allow timesheet management of caregiver visiting the user / medication dispensing device **100.** The caregiver, optionally, taps the NFC/RFID tag **125** on the medication dispensing device **100** and the medication dispensing device **100** uses its communication channel (for example, via a wired network; or via a wireless network, such as GSM [global system for mobile communications] or Wi-Fi) to a server to report the identity of the caregiver and the time he/she clocks in or clocks out. Alternatively, the caregiver can tap his/her NFC-reader equipped communication device to the medication dispensing device **100,** read the NFC/RFID code or data-information of the medication dispensing device **100** and then use the caregiver communication device to transmit this code or data-information to the server, for clocking in and out of service to the user.

The medication dispensing device **100,** optionally, includes an optional built-in short-range transceiver, such as Bluetooth or BLE (Bluetooth Low Energy), to communicate with and receive data-information from other sensors or/and telehealth monitoring devices. The medication dispensing device **100,** optionally, sends and uploads this data-information to the server using the medication dispensing device own communication channel to a server or records the data-information on the NFC/RFID tag **125** as described hereinabove. The medication dispensing device **100,** optionally, can also get instructions and data from the server and deliver to the sensors and telehealth monitoring devices.

When the medication dispensing device **100** is used to communicate with other telehealth monitoring or measurement devices, as described herein above, the NFC/RFID reader **120,** optionally, can be used to uniquely identify the user for which the collected telehealth data is related to / associated with. This resolves the common problem of receiving / collecting data-information from telehealth monitoring / measurement devices that do not have a user identification mechanism to distinguish between the different users of the same telehealth / measurement device, causing the erroneous treatment of the data or/and information collected from a number of different users as if it relates to one single individual.

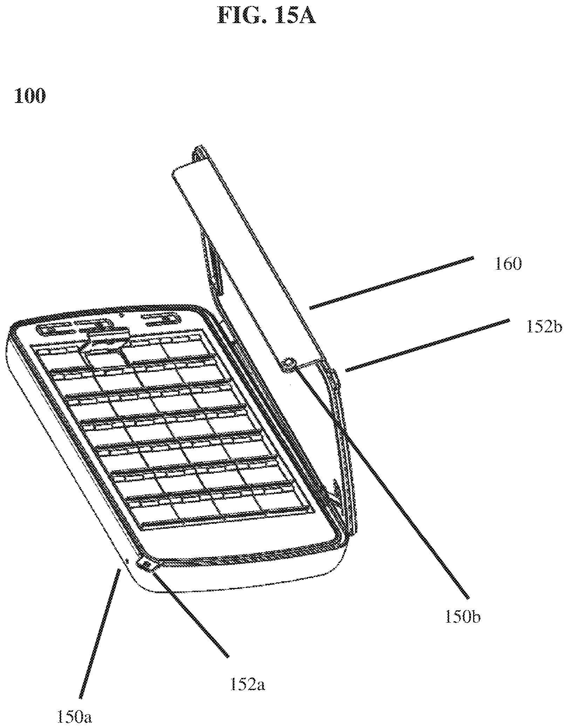

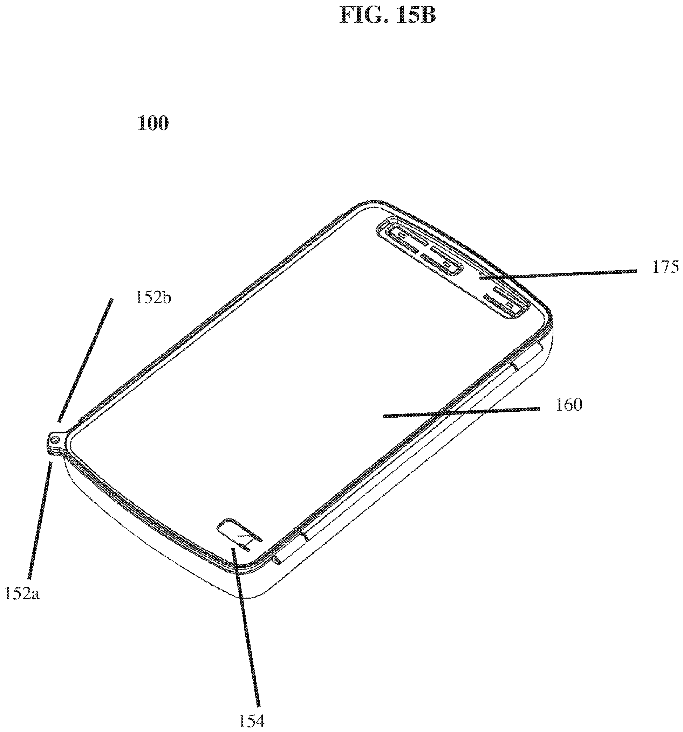

The medication dispensing device **100,** optionally, has an optional add-on locking mechanism (for example, locking elements **150a, 150b, 152a, 152b, 154** in FIGS. 8, 9, 10, 11, 15A, and 15B) that automatically locks access to the medication dispensing device lids **115** and that prevents the removal of the (blister pack or tray) medication holder **200** when it is not medication or refill time (Figures 12-A and 12-B). The locking mechanism, optionally, interfaces with a medication dispensing device cover (for example, **160** in FIGS. 15A, 15B) and has locking elements.

The medication dispensing device **100,** optionally, can have various means of power supply, and can be operated by DC power which optionally is located on the upper or the lower part the medication dispensing device **100,** and/or by internal rechargeable battery/ies. The medication dispensing device **100,** optionally, includes a connector (for example, **165** in FIG. 7B) for connecting to a DC power supply.

The medication dispensing device **100,** optionally, can have a microphone (for example, **170** in FIG. 1) for audio recording of specific instructions, or/and for enabling a user (patient) to talk with a caregiver located, for example, at a call center or health facility.

The medication dispensing device cover **160,** optionally, may be configured so that in a closed position user accessibility to the display **140** and microphone **170** (FIG. 1) is maintained, for example, as shown by **175** in FIG. 15B.

Some embodiments disclosed herein may be implemented by including some features disclosed in same applicant/assignee U.S. Patent No. 8,085,135.

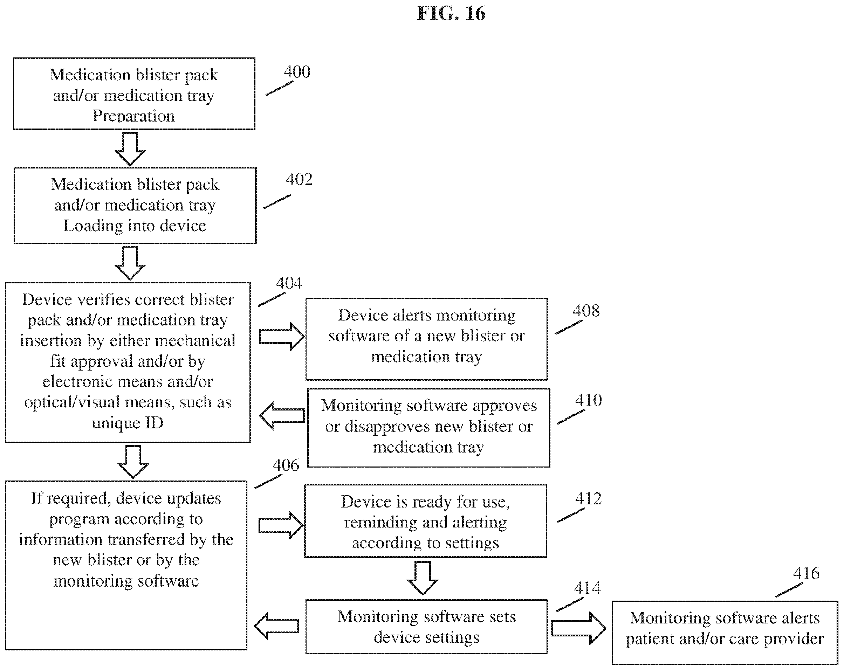

FIG. 16 is a flow diagram of a method for dispensing medication. According to an aspect of some embodiments of the invention, the method for dispensing medication includes: providing a medication dispensing device; providing a medication holder having at least one medication holding compartment filled with medication; inserting, by sliding, the medication holder into the medication dispensing device; sensing an indication of the inserted medication holder; verifying the inserted medication holder as being correct; and retrieving medication from at least one of the filled medication holding compartments.

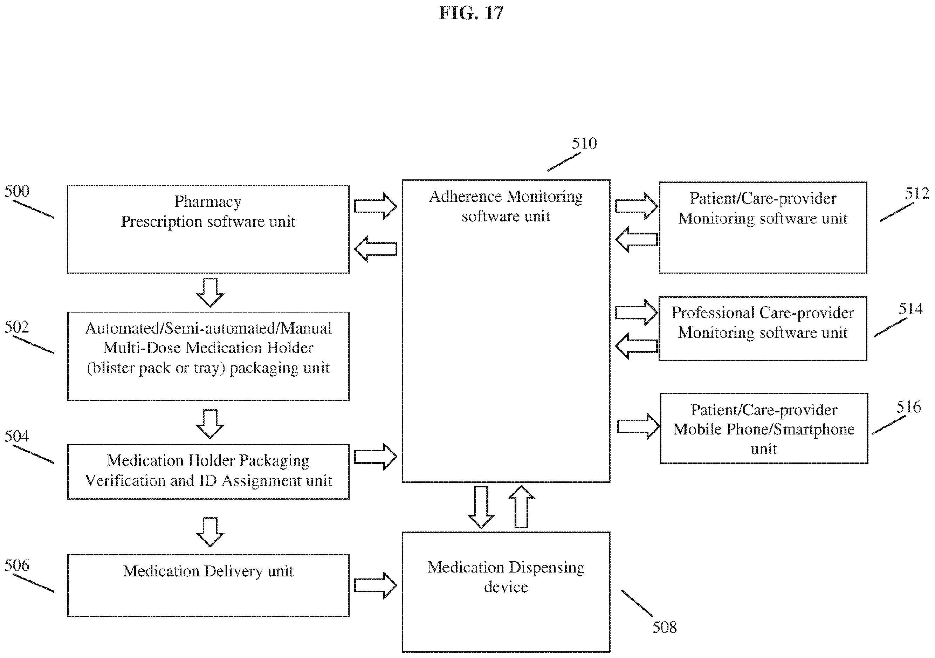

FIG. 17 is a flow diagram of a system for dispensing medication. According to an aspect of some embodiments of the invention, the medication dispensing system includes: a medication dispensing device comprising a housing having a sliding mechanism; and a medication holder comprising a receptacle containing a plurality of individual medication holding compartments, and configured to removably slide into and out of the medication dispensing device via the sliding mechanism.

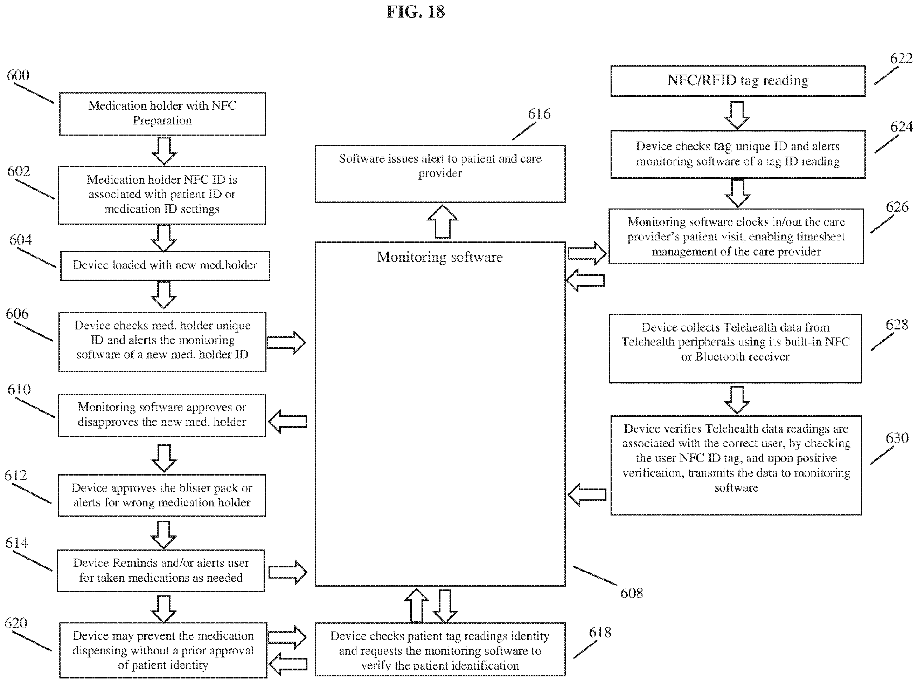

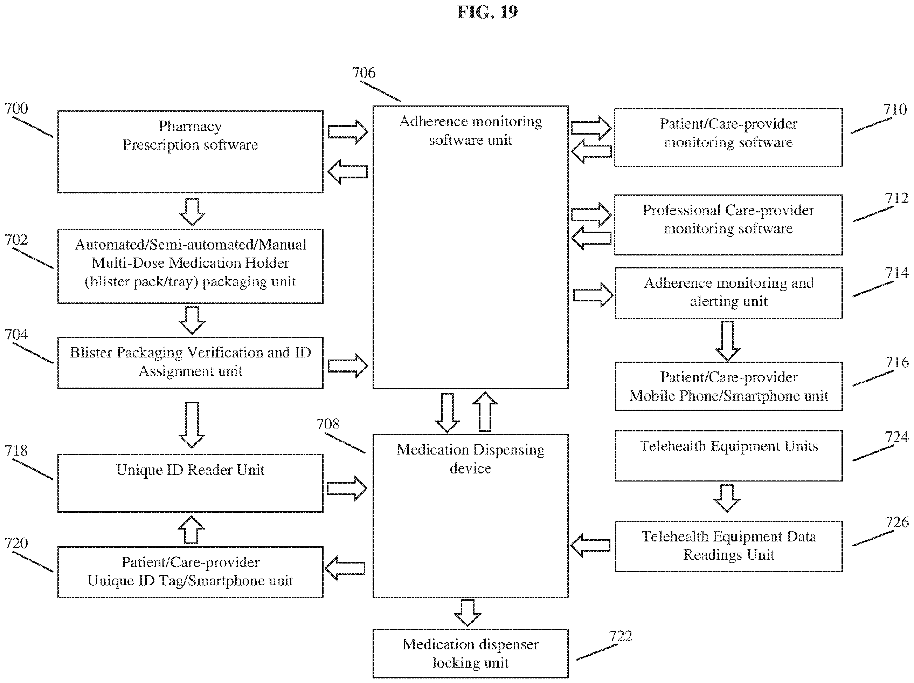

FIG. 18 is a flow diagram of a method for using computer readable (e.g., NFC [near field communication]) standards for monitoring and verifying patient and caregiver activities and health related data-information. FIG. 19 is a flow diagram of a system for using computer readable (e.g., NFC) standards for monitoring and verifying patient and caregiver activities and health related data-information.

According to an aspect of some embodiments of the invention, the method for using computer readable (e.g., NFC [near field communication]) standards for monitoring visit of a caregiver to a patient includes: providing to the patient a medication dispensing device configured with RFID circuitry operative according to the computer readable (NFC) standards; providing to the caregiver an RFID tag operative according to the computer readable standards and containing caregiver ID data-information; communicating the caregiver ID data-information to the medication dispensing device RFID circuitry via the computer readable (NFC) standards; and analyzing the caregiver ID data-information by the RFID circuitry.

According to some embodiments of the invention, the communicating includes communicating arrival and departure time data-information of the caregiver to the patient.

According to some embodiments of the invention, the analyzing includes verifying correctness of the caregiver ID data-information.

According to an aspect of some embodiments of the invention, the method for using computer readable (e.g., NFC) standards for verifying health data-information of a patient includes: providing to the patient a medication dispensing device configured with RFID circuitry operative according to the computer readable (NFC) standards and containing patient health data-information; providing to the patient an RFID tag operative according to the computer readable (NFC) standards and containing patient ID data-information; communicating the patient ID data-information to the medication dispensing device RFID circuitry via the computer readable (NFC) standards; and verifying association of the patient health data-information with the patient ID data-information by the RFID circuitry.

Each of the following terms: 'includes', 'including', 'has', 'having', 'comprises', and 'comprising', and, their linguistic / grammatical variants, derivatives, or/and conjugates, as used herein, means 'including, but not limited to', and is to be taken as specifying the stated component(s), feature(s), characteristic(s), parameter(s), integer(s), or step(s), and does not preclude addition of one or more additional component(s), feature(s), characteristic(s), parameter(s), integer(s), step(s), or groups thereof. Each of these terms is considered equivalent in meaning to the phrase 'consisting essentially of.

Each of the phrases 'consisting of and 'consists of, as used herein, means 'including and limited to'.

The phrase 'consisting essentially of, as used herein, means that the stated entity or item (system, system unit, system sub-unit, device, assembly, sub-assembly, mechanism, structure, component, element, or, peripheral equipment, utility, accessory, or material, method or process, step or procedure, sub-step or sub-procedure), which is an entirety or part of an exemplary embodiment of the disclosed invention, or/and which is used for implementing an exemplary embodiment of the disclosed invention, may include at least one additional 'feature or characteristic' being a system unit, system sub-unit, device, assembly, sub-assembly, mechanism, structure, component, or element, or, peripheral equipment, utility, accessory, or material, step or procedure, sub-step or sub-procedure), but only if each such additional 'feature or characteristic' does not materially alter the basic novel and inventive characteristics or special technical features, of the claimed entity or item.

Moreover, for stating or describing a numerical range, the phrase 'in a range of *between* about a first numerical value *and* about a second numerical value', is considered equivalent to, and meaning the same as, the phrase 'in a range of *from* about a first numerical value *to* about a second numerical value', and, thus, the two equivalently meaning phrases may be used interchangeably. For example, for stating or describing the numerical range of room temperature, the phrase 'room temperature refers to a temperature in a range of between about 20 °C and about 25 °C', and is considered equivalent to, and meaning the same as, the phrase 'room temperature refers to a temperature in a range of from about 20 °C to about 25 °C'.

The phrase 'operatively connected', as used herein, equivalently refers to the corresponding synonymous phrases 'operatively joined', and 'operatively attached', where the operative connection, operative joint, or operative attachment, is according to a physical, or/and electrical, or/and electronic, or/and mechanical, or/and electro-mechanical, manner or nature, involving various types and kinds of hardware or/and software equipment and components.

In addition, citation or identification of any reference in this specification shall not be construed or understood as an admission that such reference represents or corresponds to prior art of the present invention. To the extent that section headings are used, they should not be construed as necessarily limiting.

## Claims

1. A medication dispensing system, comprising:
a medication dispensing device (100) comprising a housing having a plurality of access lids (115); and
a medication holder (200) comprising a receptacle (205, 210) containing a plurality of individual medication holding compartments (212);
wherein said housing includes a sliding mechanism (105, 110); **characterized in that**:
said medication holder is configured to removably slide sideways into and out of said medication dispensing device via said sliding mechanism, whereby each of said compartments is configured to be slidable sideways to a location directly under an associated access lid in said housing.

2. The system of claim 1, wherein said sliding mechanism is configured to receive, hold, and release said medication holder according to at least one feature selected from the group consisting of structural features, electronic features, RF features, magnetic features, and visual features.

3. The system of claim 1, wherein said sliding mechanism is configured to receive, hold, and release said medication holder having one or more specific structural features.

4. The system of claim 3, comprising structural features correspondingly matching said one or more specific structural features of said medication holder.

5. The system of claim 4, wherein said correspondingly matching structural features are spatial clearances, pegs, or a combination thereof.

6. The system of claim 1, comprising at least one electronic reader selected from the group consisting of NFC readers, RFID readers, QR code readers, and barcode readers.

7. The system of claim 6, wherein a said electronic reader is configured to communicate with said medication holder.

8. The system of claim 1, comprising at least one electronic writer configured to record on an NFC/RFID tag in response to receiving data from said medication holder.

9. The system of claim 8, wherein said at least one electronic writer is selected from the group consisting of NFC writers and RFID writers.

10. The system of claim 1, wherein said sliding mechanism is configured to receive, hold, and release a removably slidable medication holder containing a plurality of individual medication holding compartments.

11. The system of claim 1, wherein said medication dispensing device comprising one or more electronic sensors (113) configured to sense insertion or/and removal, via said sliding mechanism, of said medication holder.

12. The system of claim 1, wherein said medication holder is having one side configured with one or more outward facing holes (240) or an outward facing external handle (235) to facilitate removably sliding the medication holder into and out of a medication dispensing device.

13. The system of claim 12, wherein said receptacle is configured with an RFID or NFC tag.

14. The system of claim 13, wherein said RFID or NFC tag is configured to send programming data-information to said medication dispensing device, wherein said data-information is used to program said medication dispensing device.

15. The system of claim 1, wherein medication dispensing device comprises an RFID tag containing patient health data-information, said medication dispensing device configured to communicate and uniquely identify a user associated with said patient health data-information.

## Patentansprüche

1. Medikamentenausgabesystem, Folgendes umfassend:
eine Medikamentenausgabevorrichtung (100), die ein Gehäuse mit einer Vielzahl von Zugangsdeckeln (115) umfasst; und
einen Medikamentenhalter (200), der eine Aufnahme (205, 210) umfasst, die eine Vielzahl von einzelnen Medikamentenhaltefächern (212) enthält;
wobei das Gehäuse einen Schiebemechanismus (105, 110) einschließt; **dadurch gekennzeichnet, dass**:
der Medikamentenhalter zum entnehmbaren seitwärts Schieben in und aus der Medikamentenausgabevorrichtung über den Schiebemechanismus konfiguriert ist, wobei jedes der Fächer konfiguriert ist, um an eine Stelle direkt unter einem zugehörigen Zugangsdeckel in dem Gehäuse seitwärts verschieblich zu sein.

2. System nach Anspruch 1, wobei der Schiebemechanismus zur Aufnahme, zum Halten und zur Freigabe des Medikamentenhalters gemäß mindestens einem Merkmal konfiguriert ist, das aus der Gruppe ausgewählt ist, bestehend aus Strukturmerkmalen, elektronischen Merkmalen, RF-Merkmalen, magnetischen Merkmalen und optischen Merkmalen.

3. System nach Anspruch 1, wobei der Schiebemechanismus konfiguriert ist, um den Medikamentenhalter mit einem oder mehreren speziellen Strukturmerkmalen aufzunehmen, zu halten und freizugeben.

4. System nach Anspruch 3, umfassend Strukturmerkmale, die entsprechend zu dem einen oder den mehreren speziellen Strukturmerkmalen des Medikamentenhalters passen.

5. System nach Anspruch 4, wobei die entsprechend passenden Strukturmerkmale räumliche Abstände, Stifte oder eine Kombination davon sind.

6. System nach Anspruch 1, umfassend mindestens ein elektronisches Lesegerät, ausgewählt aus der Gruppe bestehend aus NFC-Lesegeräten, RFID-Lesegeräten, QR-Codelesegeräten und Barcodelesegeräten.

7. System nach Anspruch 6, wobei ein elektronisches Lesegerät konfiguriert ist, um mit dem Medikamentenhalter zu kommunizieren.

8. System nach Anspruch 1, umfassend mindestens einen elektronischen Schreiber, der konfiguriert ist, um als Reaktion auf das Empfangen von Daten von dem Medikamentenhalter auf einem NFC/RFID-Tag aufzuzeichnen.

9. System nach Anspruch 8, wobei der mindestens eine elektronische Schreiber aus der Gruppe ausgewählt ist bestehend aus NFC-Schreibern und RFID-Schreibern.

10. System nach Anspruch 1, wobei der Schiebemechanismus konfiguriert ist, um einen abnehmbar verschieblichen Medikamentenhalter, der eine Vielzahl von einzelnen Medikamentenhaltefächern enthält, aufzunehmen, zu halten und freizugeben.

11. System nach Anspruch 1, wobei die Medikamentenausgabevorrichtung einen oder mehrere elektronische Sensoren (113) umfasst, die zum Erfassen des Einsetzens oder/und Entnehmens des Medikamentenhalters über den Schiebemechanismus konfiguriert sind.

12. System nach Anspruch 1, wobei der Medikamentenhalter eine Seite aufweist, die mit einem oder mehreren nach außen gerichteten Löchern (240) oder einem nach außen gerichteten Außengriff (235) konfiguriert ist, um das entnehmbare Verschieben des Medikamentenhalters in und aus einer Medikamentenausgabevorrichtung zu erleichtern.

13. System nach Anspruch 12, wobei die Aufnahme mit einem RFID- oder NFC-Tag konfiguriert ist.

14. System nach Anspruch 13, wobei das RFID- oder NFC-Tag konfiguriert ist, um Programmierdateninformationen an die Medikamentenausgabevorrichtung zu senden, wobei die Dateninformationen zum Programmieren der Medikamentenausgabevorrichtung verwendet werden.

15. System nach Anspruch 1, wobei die Medikamentenausgabevorrichtung ein RFID-Tag umfasst, das Patientendateninformationen enthält, wobei die Medikamentenausgabevorrichtung konfiguriert ist, um mit einem Benutzer, dem die Patienten-Gesundheitsdateninformationen zugeordnet sind, zu kommunizieren und ihn eindeutig zu identifizieren.

## Revendications

1. Système de distribution de médicaments, comprenant :
un dispositif de distribution de médicaments (100) comprenant un boîtier ayant une pluralité de couvercles d'accès (115) ; et
un porte-médicaments (200) comprenant un réceptacle (205, 210) contenant une pluralité de compartiments individuels de support de médicaments (212) ;
dans lequel ledit boîtier comprend un mécanisme coulissant (105, 110) ;
**caractérisé en ce que** :
ledit porte-médicaments est configuré pour coulisser de manière amovible latéralement dans et hors dudit dispositif de distribution de médicaments par l'intermédiaire dudit mécanisme coulissant, moyennant quoi chacun desdits compartiments est configuré pour pouvoir coulisser latéralement vers un emplacement directement sous un couvercle d'accès associé dans ledit boîtier.

2. Système de la revendication 1, dans lequel ledit mécanisme coulissant est configuré pour recevoir, maintenir et libérer ledit porte-médicaments selon au moins une caractéristique choisie dans le groupe consistant en des caractéristiques structurelles, des caractéristiques électroniques, des caractéristiques RF, des caractéristiques magnétiques, et des caractéristiques visuelles.

3. Système de la revendication 1, dans lequel ledit mécanisme coulissant est configuré pour recevoir, maintenir et libérer ledit porte-médicaments ayant une ou plusieurs caractéristiques structurelles spécifiques.

4. Système de la revendication 3, comprenant des caractéristiques structurelles s'appariant de manière correspondante auxdites une ou plusieurs caractéristiques structurelles spécifiques dudit porte-médicaments.

5. Système de la revendication 4, dans lequel lesdites caractéristiques structurelles s'appariant de manière correspondante sont des jeux spatiaux, des tenons, ou une combinaison de ceux-ci.

6. Système de la revendication 1, comprenant au moins un lecteur électronique choisi dans le groupe consistant en des lecteurs NFC, des lecteurs RFID, des lecteurs de code QR, et des lecteurs de code à barres.

7. Système de la revendication 6, dans lequel ledit lecteur électronique est configuré pour communiquer avec ledit porte-médicaments.

8. Système de la revendication 1, comprenant au moins un dispositif d'écriture électronique configuré pour effectuer un enregistrement sur une étiquette NFC/RFID en réponse à la réception de données à partir dudit porte-médicaments.

9. Système de la revendication 8, dans lequel ledit au moins un dispositif d'écriture électronique est choisi dans le groupe consistant en des dispositifs d'écriture NFC et des dispositifs d'écriture RFID.

10. Système de la revendication 1, dans lequel ledit mécanisme coulissant est configuré pour recevoir, maintenir et libérer un porte-médicaments coulissant de manière amovible contenant une pluralité de compartiments individuels de support de médicaments.

11. Système de la revendication 1, dans lequel ledit dispositif de distribution de médicaments comprenant un ou plusieurs capteurs électroniques (113) configurés pour détecter l'insertion et/ou le retrait, par l'intermédiaire dudit mécanisme coulissant, dudit porte-médicaments.

12. Système de la revendication 1, dans lequel ledit porte-médicaments présente un côté configuré avec un ou plusieurs trous tournés vers l'extérieur (240) ou une poignée externe tournée vers l'extérieur (235) pour faciliter le coulissement amovible du porte-médicaments dans et hors d'un dispositif de distribution de médicaments.

13. Système de la revendication 12, dans lequel ledit réceptacle est configuré avec une étiquette RFID ou NFC.

14. Système de la revendication 13, dans lequel ladite étiquette RFID ou NFC est configurée pour envoyer des informations de données de programmation audit dispositif de distribution de médicaments, où lesdites informations de données sont utilisées pour programmer ledit dispositif de distribution de médicaments.

15. Système de la revendication 1, dans lequel le dispositif de distribution de médicaments comprend une étiquette RFID contenant des informations de données de santé du patient, ledit dispositif de distribution de médicaments étant configuré pour communiquer et identifier de manière unique un utilisateur associé auxdites informations de données de santé du patient.
